Europäisches Patentamt

European Patent Office

Office européen des brevets

(11) Numéro de publication: **0 385 051**
**A1**

## DEMANDE DE BREVET EUROPEEN

(21) Numéro de dépôt: 89810420.3

(51) Int. Cl.⁵: **A23L 2/02, A23C 9/13**

(22) Date de dépôt: 05.06.89

(30) Priorité: 02.03.89 CH 772/89

(43) Date de publication de la demande:
05.09.90 Bulletin 90/36

(84) Etats contractants désignés:
AT BE CH DE ES FR GB GR IT LI LU NL SE

(71) Demandeur: FRILK (R) société anonyme

FL-9492 Eschen(LI)

(72) Inventeur: Gosteli, Markus
Seevorstadt 14 B
CH-2502 Bienne(CH)

(74) Mandataire: North, Mathieu
Rue du Puits-Godet 22
CH-2001 Neuchâtel(CH)

(54) Boisson avec un PH compris entre 3,6 et 4,2 à base de lait non acidifié et procédé de fabrication d'une telle boisson.

(57) Cette boisson d'un pH de 3,6 à 4,2 et à base de lait non acidifié contient
de 35 à 65% en poids d'au moins un jus de fruits et/ou d'un concentré de fruits,
de 35 à 65% en poids de lait non acidifié, et
de 0,2 à 1% en poids d'au moins un stabilisateur.
Un procédé de fabrication de cette boisson est décrit.

EP 0 385 051 A1

## Boisson avec un pH compris entre 3,6 et 4,2 et à base de lait non acidifié ainsi que procédé de fabrication de cette boisson

La présente invention concerne une boisson avec un pH de 3,6 à 4,2 à base de lait non acidifié ainsi qu'un procédé de fabrication d'une telle boisson.

On connaît des boissons à base de lait qui sont mêlées à de petites quantités de jus de fruits non acides, comme par exemple, des fraises, des ananas ou des framboises. On maintient en général les valeurs de pH dans de telles boissons à environ 6,5. Lorsque le pH est en dessous de 6, et particulièrement en dessous de 4,5, le lait commence à se coaguler, ce qui a une influence négative sur l'apparence de la boisson et gâte en outre son goût et son odeur. De plus, la règle est admise que le lait, dans de telles boissons, se coagule d'autant plus vite que la température est plus élevée (par exemple pendant le processus de pasteurisation ou de stérilisation).

Il est connu que les jus d'agrumes ont des valeurs de pH situées entre 3,2 et 3,9 selon la provenance des fruits. Si maintenant on fabrique un mélange constitué d'une partie de jus d'agrumes et d'une partie de lait, le lait se coagule dans un délai qui va de quelques secondes à quelques minutes. Il est possible de fabriquer un mélange contenant de 0,5 à 1% en poids de jus d'agrumes et de 99,5 à 99% en poids de lait; cependant, un tel mélange ne tient pas longtemps et il n'a pas bon goût.

Compte tenu de cet état de la technique, il paraît impossible de préparer une boisson ayant un pH inférieur à 6 à base de lait non acidifié, ayant un goût et une odeur prononcés et agréables, et qui en outre soit durable.

La boisson selon l'invention, qui a un pH de 3,6 à 4,2 et qui est à base de lait non acidifié est caractérisée en ce qu'elle contient
de 35 a 65% en poids d'au moins un jus ou un concentré de fruits,
de 35 à 65% en poids de lait non acidifié, et
de 0,2 à 1% en poids d'au moins un stabilisateur.

Le procédé de fabrication selon l'invention d'une boisson d'un pH compris entre 3,6 et 4,2 et à base de lait non acidifié est caractérisé en ce que
a) l'on ajoute de 0,2 à 1% en poids d'au moins un stabilisateur à 35% à 65% en poids de lait non acidifié,
b) qu'on laisse reposer le mélange ainsi obtenu pendant au moins une heure, qu'en outre
c) on mélange avec 35 à 65% en poids d'au moins un jus ou un concentré de fruits, et
d) l'on soumet le mélange ainsi obtenu à un traitement thermique.

Des formes d'exécution préférées de l'invention sont définies dans les revendications dépendantes.

Sans s'attacher à une théorie particulière, on peut présumer que le stabilisateur utilisé selon l'invention stabilise les albumines du lait.

Des résultats nets sont obtenus lorsque le stabilisateur est une pectine, particulièrement une pectine à haute teneur en ester, de préférence tirée de pelures de citron. La mexpectin RS 450 de Grindsted, DK-8220 Brabrand, Danemark et la genupectin JM de la Copenhagen Pectin Factory Ltd., se sont révélées tout particulièrement adaptées.

Comme édulcorant, on peut utiliser des sucres, par exemple la sacharose, la fructose, des succédanés du sucre ou des édulcorants artificiels.

Pour augmenter encore la durée de la stabilité de la boisson selon l'invention, on peut selon les besoins ajouter encore un moyen de conservation.

La phase d) du procédé selon l'invention sert à donner sa stabilité au produit fabriqué selon l'invention.

Après pasteurisation et stérilisation, la boisson selon l'invention tient habituellement à la température ambiante pendant quelques mois, sans qu'il soit possible de déceler une perte de qualité.

N'importe quelle installation de pasteurisation, par exemple Alfa-Laval ou APV peut être utilisée. On peut également utiliser n'importe quelle installation de stérilisation, par exemple Steritherm de Alfa-Laval, APV ou Stork.

Dans la phase a) du procédé selon l'invention, le lait non acidifié a de préférence une température comprise entre 0 et 10°C.

Le jus de fruits exigé dans le procédé selon l'invention peut aussi être immédiatement fabriqué avant son utilisation au moyen de concentré de jus de fruits et de la quantité d'eau nécessaire.

Le lait nécessaire au procédé selon l'invention peut aussi être fabriqué immédiatement avant son emploi au moyen de poudre de lait et de la quantité d'eau nécessaire. On peut également utiliser des mélanges de lait, par exemple des mélanges de lait complet, de lait maigre, de crème et de produits enrichis de protéines à volonté.

On peut citer comme substances aromatisantes le cacao, la vanille ou tous arômes de fruits, qui peuvent être introduits isolément ou en mélange.

La boisson selon l'invention a un goût et une odeur prononcés et elle est très agréable.

Les pourcentages en poids se réfèrent au poids total de la boisson terminée.

Les exemples suivants illustrent l'invention.

Exemple 1

Quantité : lait 0,5 l
jus d'ananas 0,5 l
sucre 75 g
Stabilisateur 2,8 à 4 g (mexpectin RS 450)
Arome à volonté

Procédé : mélanger le stabilisateur avec le sucre, à sec, puis dissoudre complètement dans le lait froid à 5°C en remuant fortement et observer une pause de 30 mn au moins. Puis ajouter le jus d'ananas au lait froid en remuant constamment. Ce mélange est réchauffé jusqu'à 80°C pendant 3 à 15 secondes, homogénéisé à 150 bars et refroidi à 10°C et finalement versé dans des emballages aseptiques, pour être stocké dans des armoires frigorifiques.

Exemple 2

Quantités : lait 0,5 l
concentré de jus d'oranges 114g(env 55° Brix)
eau 0,41 l
sucre 75 g
stabilisateur 2,8 à 4g (mexpectine RS 450)
citrat de sodium 2 g
Arôme à volonté

Procédé : mélanger le sucre et le stabilisateur à sec et dissoudre dans 0,1 l d'eau à 65°C. Refroidir cette solution aqueuse de 5 à 10°C et ajouter au lait froid à 5°C. 30 mn de pause. Ajouter le reste de l'eau puis ajouter le concentré de jus d'oranges dans le mélange de lait froid. On procède ensuite de la manière décrite dans l'exemple 1.

Exemple 3

Quantités : poudre de lait 67 g
eau 0,45 l
jus d'oranges 0,5 l
sucre 75 g
stabilisateur 5-8 g (genupectin JM)
arôme à volonté

Procédé : mélanger à sec le sucre et le stabilisateur et dissoudre dans 0,1 l d'eau à 65°C. Refroidir cette solution aqueuse à 5 à 10°C et ajouter au lait reconstitué avec le reste de l'eau à 5°C. Puis continuer selon le procédé décrit dans l'exemple 1.

Exemple 4

Quantités : lait 0,5 l;
jus de fruits 0,5 l

eau 0,1 l
aspartam 0,3 g
stabilisateur voir ex. 1 ou 3

Procédé : dissoudre complètement le stabilisateur et l'aspartam dans l'eau à 65°C. Refroidir cette solution aqueuse à 5 à 10°C et ajouter au lait froid à 5°C. on continue ensuite selon le procédé décrit dans l'exemple 1.

Exemple 5

Quantités : lait avec 8% de graisse 0,5 l
jus d'oranges 0,5 l
brandy orange à 45% vol 0,15 l
sucre 75 g
stabilisateur (voir ex. 1 ou 3)

Procédé : comme dans ex. 1 . Le spiritueux est ajouté au mélange froid de lait et de jus d'oranges avant le traitement thermique.

Exemple 6

Quantités : lait 0,375 l
petit lait ou babeurre 0,125 l
jus d'oranges 0,5 l
sucre 75 g
stabilisateur 2,8 g (voir ex. 1 ou 3)

Procédé : selon exemple 1. Le petit lait et/ou le babeurre sont ajoutés au lait après la pause.

**Revendications**

1. Boisson avec un pH compris entre 3,6 et 4,2 et à base de lait non acidifié, caractérisé en ce qu'il contient
de 35 à 65% en poids d'au moins 1 jus de fruits et/ou de concentré de fruits,
de 35 à 65% en poids de lait non acidifié et de 0,2 à 1% en poids d'au moins un stabilisateur.

2. Boisson selon la revendication 1, caractérisée en ce qu'elle comprend en outre au moins un élément constitutif, choisi parmi
au moins un édulcorant, de préférence jusqu'à 15%
au moins une substance aromatisante, de préférence, jusqu'à 1% en poids,
au moins un colorant , de préférence, jusqu'à 1%;
de l'eau, de préférence jusqu'à 30% en poids,
des spiritueux, de préférence jusqu'à 15% en poids,et
au moins un sel stabilisateur, de préférence jusqu'à 0,2% en poids, et d'autres éléments constitutifs du lait, en particulier de la crème.

3. Boisson selon l'une des revendications 1 à 2, caractérisée en ce que le jus de fruits et/ou le concentré de fruits est choisi parmi les agrumes et les fruits acides.

4. Boisson selon l'une des revendications 1 à 5, caractérisée en ce que le stabilisateur est une pectine, particulièrement une pectine à haute teneur en ester, de préférence tirée de la pelure de citron.

5. Procédé de fabrication d'une boisson ayant un pH compris entre 3,6 et 4,2 à base de lait non acidifié, caractérisé en ce que

a) l'on additionne de 0,2 à 1% en poids d'au moins un stabilisateur à 35 à 65% en poids de lait non acidifié

b) on laisse reposer le mélange ainsi obtenu pendant au moins une heure, et qu'en outre

c) on mêle à ce mélange 35 à 65% en poids d'au moins un jus de fruits et/ou d'un concentré de fruits, et

d) l'on soumet le mélange ainsi obtenu à un traitement thermique.

6. Procédé selon la revendication 5, caractérisé en ce que l'on mélange ledit stabilisateur avec au moins un édulcorant, représentant de préférence 15% en poids, et qu'on ajoute ce mélange audit lait non acidifié.

7. Procédé selon les revendications 5 à 6 caractérisé en ce que le jus de fruits et/ou le concentré de fruits est choisi parmi les agrumes et les fruits acides.

8. Procédé selon l'une des revendications 5 à 7, caractérisé en ce que le stabilisateur est une pectine, en particulier une pectine à haute teneur en ester, de préférence tirée de pelures de citron.

9. Procédé selon l'une des revendications 5 à 8, caractérisé en ce que l'on ajoute au mélange, à un certain moment, encore au moins un élément constitutif choisi parmi

au moins un édulcorant, de préférence dans une quantité de 15% en poids

au moins une substance aromatisante, de préférence jusqu'à 1% en poids,

au moins un colorant, de préférence jusqu'à 1% en poids,

de l'eau, de préférence jusqu'à 30% en poids,

des spiritueux, de préférence jusqu'à 15% en poids,

au moins un sel stabilisateur, de préférence jusqu'à 0,2% en poids,

et d'autres éléments constitutifs du lait, en particulier de la crème.

10. Procédé selon l'une des revendications 5 à 9, caractérisé en ce que, dans la phase b), on laisse le mélange pendant au moins 30 minutes à une température inférieure à 10°C.

11. Procédé selon l'une des revendications 5 à 10, caractérisé en ce que, avant ou après la phase de traitement thermique d), on homogénéise le mélange sous une pression de 50 à 250 bars à une température de 70 à 90°C.

12. Procédé selon l'une des revendications 5 à 11, caractérisé en ce que l'on exécute la phase de traitement thermique d) dans un dispositif de pasteurisation ou de stérilisation, et que, après ce traitement, le mélange obtenu est refroidi à une température inférieure à 10°C, et de préférence inférieure à 5°C.

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.5) |
|---|---|---|---|
| A | PATENT ABSTRACTS OF JAPAN vol. 8, no. 218 (C-245)(1655), 4 octobre 1984; & JP - A - 59 102 335 (SUMITOMO KAGAKU KOGYO K.K.) 13.06.1984 --- | 1,3,4,7 | A 23 L    2/02 A 23 C    9/13 |
| A | PATENT ABSTRACTS OF JAPAN vol. 8, no. 273 (C-256)(1710), 13 décembre 1984; & JP - A - 59 143 574 (KIRIN BEER K.K.) 17.08.1984 --- | 1-3,7 | |
| A | US-A-4 676 988  (J.D. EFSTATHIOU et al.) * abrégé * ----- | 1 | |

| DOMAINES TECHNIQUES RECHERCHES (Int. Cl.5) |
|---|
| A 23 L    2/00 A 23 C    9/00 |

Le présent rapport a été établi pour toutes les revendications

| Lieu de la recherche | Date d'achèvement de la recherche | Examinateur |
|---|---|---|
| BERLIN | 17-05-1990 | SCHULTZE D |